# EUROPÄISCHE PATENTSCHRIFT

(11) **EP 1 281 648 B1**
(45) Veröffentlichungstag und Bekanntmachung des Hinweises auf die Patenterteilung: **24.05.2006**
(21) Anmeldenummer: 02015123.9
(22) Anmeldetag: 06.07.2002
(51) Int. Cl.: B65H 9/16

(54) **Vorrichtung zum Transport von blattförmigen Bedruckstoffen**
Device for transporting sheet like print carriers
Dispositif pour transporter des supports d'impression sous forme de feuilles

(30) Priorität: 30.07.2001 DE 10137165; 26.09.2001 DE 10147485
(43) Veröffentlichungstag der Anmeldung: 05.02.2003
(73) Patentinhaber: Heidelberger Druckmaschinen Aktiengesellschaft, 69115 Heidelberg (DE)
(72) Erfinder: Blank, Kurt, 73061 Ebersbach (DE); Martens, Olaf, 73347 Mühlhausen (DE); Ries, Jürgen, 73760 Ostfildern (DE)
(74) Vertreter: Franzen, Peter

(56) Entgegenhaltungen:
- EP-A- 0 465 764
- DE-A- 19 815 369

## Beschreibung

Die Erfindung betrifft eine Vorrichtung zum Transport von blattförmigen Bedruckstoffen, gemäß des Oberbegnffs des Anspruchs 1.

Die Mehrzahl der in der Druckbearbeitung und Druckweiterverarbeitung verwendeten Vorrichtungen erfordern einen Transport von Papier oder anderen blattförmigen Bedruckstoffen durch die Vorrichtung. Dabei werden die blattförmigen Bedruckstoffe besonders im Anlegerbereich auf unterschiedliche Art und Weise ausgerichtet. Die Ausrichtung der blattförmigen Bedruckstoffe ist meist erforderlich, um registergenaue Bearbeitungsvorgänge durchführen zu können, etwa das Bedrucken der blattförmigen Bedruckstoffe mit unterschiedlichen Farben, positionsgenaue Falzen oder das Einbringen von Löchern in Einzelblätter.

Zur seitlichen Ausrichtung der blattförmigen Bedruckstoffe werden häufig Anschläge verwendet, gegen die ein blattförmiger Bedruckstoff geleitet wird. So werden z.B. bei Falzmaschinen Transportelemente wie schräg laufende Transportrollen, oder ein schräglaufendes Band verwendet, welche die blattförmigen Bedruckstoffe während des Vorwärtstransports gegen einen Anschlag leiten. Um den Kontakt zwischen dem blattförmigen Bedruckstoff und den Transportelementen zu verbessern oder zu ermöglichen, sind den Transportrollen häufig Kontaktelemente zugeordnet, die einen ausreichenden Andruck zwischen blattförmigem Bedruckstoff und Transportelementen herstellen. Dazu werden unter anderem Kugelleisten verwendet, die Aussparungen aufweisen, in die frei drehbare Kugeln eingelegt werden. Zur Verwendung kommen hierbei Kunststoff- oder Metallkugeln. Die Kugeln werden so gewählt, dass sie mit ihrer Oberflächenbeschaffenheit und ihrem Gewicht optimal an die Beschaffenheit der blattförmigen Bedruckstoffe, z.B. Flächengewicht, Oberflächenbeschaffenheit usw. angepasst sind.

Derartige Vorrichtungen sind aus dem Stand der Technik beispielsweise aus der deutschen Offenlegungsschrift DE 198 15 369 A1 bekannt. Dabei handelt es sich um eine Vorrichtung zum Auftragen eines Klebstoffstreifens auf Vorsatzbogen parallel zum Rückenfalz mit einer Bogenauflage, mit einem vereinzelte Vorsatzbogen im rückennahen Bereich erfassenden und auf der Bogenauflage entlang einer Klebstoffauftragsdüse vortransportierenden Fördermittel. Des Weiteren ist eine Vorrichtung aus der europäischen Patentanmeldung EP 465 764 A2 bekannt. Hierbei handelt es sich um eine Papierpfadsteuerung an einer Druckmaschine, bei der zwischen unterschiedlichen Papierpfaden ausgewählt werden kann, bei dem in einem der Papierpfade die Blätter zuvor seitlich ausgerichtet werden.

In vielen Anwendungen, besonders im Bereich von Kopierern und / oder digitalen Druckern, die typischerweise eine Vielzahl unterschiedlicher Bogenformate in unterschiedlichen Vorratsbehältern aufweisen, ist es erforderlich, die Ausrichtung der blattförmigen Bedruckstoffe an das Format der blattförmigen Bedruckstoffe anzupassen. Daher sind die Anschläge in der Regel verstellbar.

In Anwendungen der Druckweiterverarbeitung ist meist ein hohes Maß an Flexibilität erforderlich, so dass eine Weiterverarbeitungsvorrichtung oft aus einer Mehrzahl von Einzelbearbeitungsvorrichtungen besteht, die hintereinander, miteinander verbunden angeordnet sind, wobei hier von einer "Inline"-Konfiguration der Einzelbearbeitungsvorrichtungen gesprochen wird. Bei der Inline-Weiterverarbeitung sind nicht stets alle der Einzelbearbeitungsvorrichtungen an der Weiterverarbeitung des Druckerzeugnisses beteiligt. Eine Veränderung der bestehenden Konfiguration ist aber in der Regel nur mit einem erhöhten Aufwand durchzuführen. Daher ist es wünschenswert und / oder erforderlich, dass die jeweils nicht beteiligten Einzelbearbeitungsvorrichtungen ausgeschaltet sind oder in einem Bypass-Betrieb arbeiten. Die blattförmigen Bedruckstoffe müssen in diesem Fall ohne Veränderung, insbesondere ohne Veränderung ihrer Ausrichtung, von einer Einzelbearbeitungsvorrichtung zur nächsten transportiert werden.

Es ist daher die Aufgabe der Erfindung, eine verbesserte Vorrichtung zum Transport von blattförmigen Bedruckstoffen zu schaffen, die von einem normalen Betrieb zu einem Bypass-Betrieb umgeschaltet werden kann. Diese Aufgabe wird mit der erfindungsgemäßen Vorrichtung zum Transport von blattförmigen Bedruckstoffen gemäß der kennzeichnenden Merkmale des Anspruchs 1 gelöst.

In einer Weiterbildung der erfindungsgemäßen Vorrichtung umfasst die erfindungsgemäße Vorrichtung eine Steuerung und Speichermittel, mittels deren der Wechsel zwischen dem ersten Transportelement und den zweiten Transportelementen automatisch gemäß einer in den Speichermitteln abgelegten Anweisung erfolgt. Die Anweisung kann hier durch die Eingabe eines Bedieners beim Einrichten des Druck- und / oder Weiterverarbeitungsvorgangs geschehen oder durch eine Steuerung erfolgen, die mittels Sensoren ermittelt, ob ein einlaufender blattförmiger Bedruckstoff ausgerichtet oder in einem Bypass-Betrieb ohne Ausrichtung durch die erfindungsgemäße Vorrichtung geleitet werden soll. Ebenfalls kann die Anweisung von einer der erfindungsgemäßen Vorrichtung vorgelagerten Vorrichtung erfolgen, die der erfindungsgemäßen Vorrichtung den blattförmigen Bedruckstoff übergibt, oder aber die Anweisung erfolgt durch eine zentrale Steuereinheit, die den gesamten Druck- und / oder Weiterverarbeitungsvorgang koordiniert. Auf diese Weise ist kein Eingriff eines Bedieners während des laufenden Betriebs der erfindungsgemäßen Vorrichtung erforderlich.

In vorteilhafter Ausgestaltung handelt es sich bei dem ersten Transportelement um ein angetriebenes, schräglaufendes Band, das den blattförmigen Bedruckstoff seitlich gegen einen Anschlag befördert.

In einer weiteren vorteilhaften Ausgestaltung der erfindungsgemäßen Vorrichtung ist der Anschlag seitlich verschiebbar. Dadurch lässt sich die Ausrichtung auf unterschiedliche Formate der blattförmigen Bedruckstoffe anpassen. Die Ausrichtung der blattförmigen Bedruckstoffe erfolgt dabei vorteilhafterweise zur Mittellinie des blattförmigen Bedruckstoffs relativ zur Mittellinie des Transportpfades oder zu bestimmten Distanzen zur Mittellinie des Transportpfads.

In einer Weiterbildung der Ausgestaltung umfasst die Vorrichtung eine Steuerung und Speichermittel, mittels deren die seitliche Anpassung des Anschlags automatisch gemäß einer in den Speichermitteln abgelegten Anweisung erfolgt. Die Anweisung kann hier ebenfalls durch die Eingabe eines Bedieners beim Einrichten des Druck- und / oder Weiterverarbeitungsvorgangs geschehen oder durch eine Steuerung erfolgen, die mittels Sensoren ermittelt, welches Format der einlaufende blattförmige Bedruckstoff aufweist, und an welche Stelle daher der Anschlag bewegt werden muss, um eine entsprechende Ausrichtung des blattförmigen Bedruckstoffs zu erzielen. Ebenfalls kann die Anweisung über das Format des blattförmigen Bedruckstoffs und die damit verbundene Position des Anschlags von einer der erfindungsgemäßen Vorrichtung vorgelagerten Vorrichtung erfolgen; die der erfindungsgemäßen Vorrichtung den blattförmigen Bedruckstoff übergibt. Ebenfalls kann die Anweisung durch eine zentrale Steuereinheit erfolgen, die den gesamten Druck- und / oder Weiterverarbeitungsvorgang koordiniert. Auf diese Weise ist kein Eingriff eines Bedieners zur Veränderung des Anschlags und damit zur Formatanpassung der erfindungsgemäßen Vorrichtung während des laufenden Betriebs erforderlich.

In einer Weiterbildung der erfindungsgemäßen Vorrichtung erfolgt die seitliche Verschiebung des Anschlags durch einen mittels eines Motors angetriebenen Riemenzugs oder einer Spindel oder einer Kurvenscheibe.

In vorteilhafter Ausgestaltung der erfindungsgemäßen Vorrichtung handelt es sich bei den zweiten Transportelementen um angetriebene Transportrollenpaare und bei den zweiten Kontaktelementen um Gegenrollen, mit denen der Kontakt zwischen blattförmigem Bedruckstoff und den zweiten Transportelementen hergestellt wird, so dass ein Transport des blattförmigen Bedruckstoffs ohne Ausrichtung erfolgt.

In einer Weiterbildung handelt es sich bei den ersten Kontaktelementen um Kugeln, wobei die Kugeln frei drehbar in einer Kugelleiste gelagert sind und die Kugeln durch ihr Gewicht und ihre Oberflächenbeschaffenheit den Kontakt zwischen blattförmigem Bedruckstoff und erstem Transportelement herstellen. Da sich die Kugeln frei um jede beliebige Achse drehen können, erzeugen sie bei einer zur Transportrichtung der blattförmigen Bedruckstoffe durch die Vorrichtung abweichenden Schräglauf keine Spuren auf den blattförmigen Bedruckstoffen. Bei den Kugeln handelt es sich vorteilhafterweise um Metall- und / oder Kunststoffkugeln, die so ausgelegt sind, dass blattförmige Bedruckstoffe mit einem Blattgewicht von 50 g/m² bis 300 g/m² und unterschiedliche Materialien wie Papier und Folien sicher transportiert werden können.

In einer weiteren Ausgestaltung der erfindungsgemäßen Vorrichtung umfasst der Kopplungsmechanismus zwischen Kugelleiste und zweiten Kontaktelementen eine Antriebstange, die gerätefest drehbar gelagert ist, sowie einen ersten Exzenter in Kontakt mit der Kugelleiste und einen zweiten Exzenter in Kontakt mit einer Schubstange, wobei der erste Exzenter und der zweite Exzenter auf der Antriebstange befestigt sind, sowie eine Schubstange und Hebel, die eine Wirkverbindung zwischen dem zweiten Exzenter und den zweiten Kontaktelementen herstellen.

In einer besonders vorteilhaften Ausführungsform der erfindungsgemäßen Vorrichtung umfasst die Vorrichtung einen Untertisch und einen Obertisch, wobei der Kopplungsmechanismus und die Kontaktelemente in dem über dem Transportpfad der blattförmigen Bedruckstoffe befindlichen Obertisch angeordnet sind und der Obertisch schwenkbar an dem ersten Untertisch gelagert ist. Dadurch ist ein Öffnen des Transportpfades der blattförmigen Bedruckstoffe durch die erfindungsgemäße Vorrichtung einfach durchführbar, etwa zur Beseitigung eines Papierstaus.

In einer weiteren Ausführungsform umfasst die erfindungsgemäße Vorrichtung einen Sensor und eine Markierung, mittels dem die Funktionsposition der Kontaktelemente überwacht wird.

Bevorzugte Ausführungsformen der erfindungsgemäßen Vorrichtung werden im Folgenden unter Bezugnahme auf die Zeichnung im Einzelnen näher beschrieben. Es zeigen in schematischer Darstellung:
- Fig. 1: eine schematische Ansicht einer Ausführungsform der erfindungsgemäßen Vorrichtung mit abgeschwenktem Obertisch;
- Fig. 2: eine schematische Ansicht der Unterseite des Untertisches der erfindungsgemäßen Vorrichtung;
- Fig. 3: eine schematische Aufsicht auf die erfindungsgemäße Vorrichtung mit heruntergeschwenktem Obertisch.

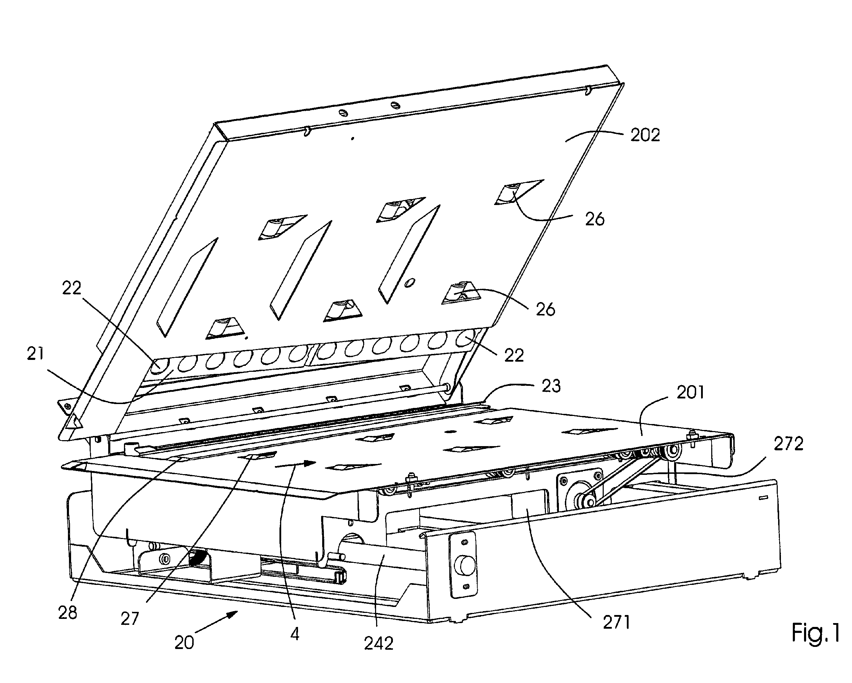

Die Fig. 1 zeigt die schematische Draufsicht einer Ausführungsform der erfindungsgemäßen Vorrichtung 20. Weitere, allgemein bekannte und zum Betrieb der Vorrichtung erforderliche Antriebs und/oder Führungsmittel und Kurvenscheiben sind nur schematisch dargestellt bzw. werden nur in allgemeiner Form beschrieben.

Wie in Fig. 1 gezeigt, umfasst die erfindungsgemäße Vorrichtung 20 einen Untertisch 201 und eine Obertisch 202. Der Obertisch 202 ist mit dem Untertisch 201 schwenkbar gelagert verbunden, so dass ein Aufklappen und ein leichter Zugang zum Innenraum zwischen Untertisch 201 und Obertisch 202 gewährleistet ist.

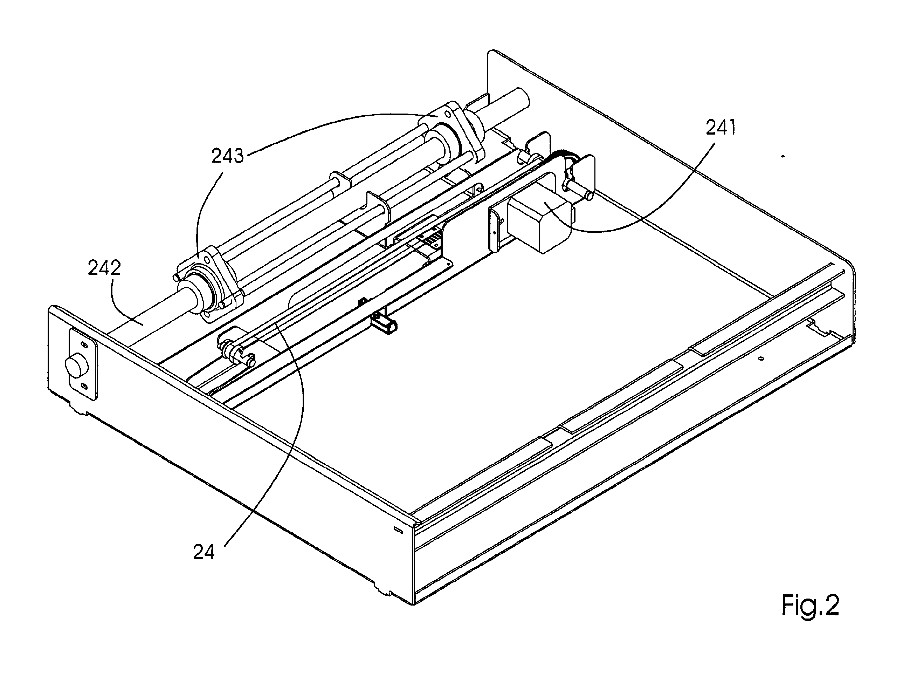

Der Untertisch 201 ist auf einer Führungsstange 242, die im Gehäuse der erfindungsgemäßen Vorrichtung 20 befestigt ist, auf zwei Gleitlagern 243 gelagert. Wie in Fig. 2 gezeigt, befindet sich auf der Unterseite des Gehäuses der erfindungsgemäßen Vorrichtung 20 ein Motor 241, der über eine Übersetzung einen Riemenzug 24 antreibt, mittels dessen der Untertisch 201 entlang der Führungsstange 242 gezielt bewegt werden kann. Gleichzeitig zur Bewegung des Untertischs 201 bewegt sich auch der daran schwenkbar befestigte Obertisch 202.

Der Untertisch umfasst ein erstes Transportelement 28, das als ein schräglaufendes Transportband 28 ausgeführt ist, sowie zwei Transportelemente 27, die als drei Transportrollenpaare 27 ausgeführt sind. Die Transportelemente 27, 28 wirken mit zugeordneten Kontaktelementen 22, 26 zusammen, die im Obertisch 202 angeordnet sind. Durch die Kontaktelemente 22, 26 wird ein entlang des mit dem Bezugszeichen 4 gekennzeichneten Pfeils auf einem Transportpfad durch die erfindungsgemäße Vorrichtung 20 einlaufender blattförmiger Bedruckstoff in Kontakt mit den Transportelementen 27, 28 gebracht, so dass die Reibung zwischen dem blattförmigen Bedruckstoff und den Transportelementen 27, 28 ausreichend ist, um den blattförmigen Bedruckstoff durch die Vorrichtung zu transportieren. Die Transportelemente 27, 28 werden gemeinsam über einen am Untertisch 201 befestigten Motor 271 über einen Riemenzug 272 und ein nicht dargestelltes, dem Fachmann bekanntes Getriebe angetrieben.

Des Weiteren ist auf dem Untertisch 201 ein Anschlag 23 angeordnet, gegen den das erste Transportelement 28 in Zusammenwirkung mit dem ersten Kontaktelement 22 einen blattförmigen Bedruckstoff fördert. Da der Untertisch 201 wie oben beschrieben seitlich verschiebbar ist, lässt sich der Anschlag 23 ebenfalls seitlich zum Transportpfad bewegen.

Die erfindungsgemäße Vorrichtung 20 ist darauf ausgelegt, so dass mittels des beweglichen Anschlags 23 ein blattförmiger Bedruckstoff mit einer Breite zwischen 150 mm bis 400 mm mittig bezüglich des Transportpfades durch die erfindungsgemäße Vorrichtung 20 ausgerichtet werden kann.

Eine nicht gezeigte, dem Fachmann bekannte Elektronik steuert die Position des Anschlags 23 gemäß des Formats des einlaufenden blattförmigen Bedruckstoffes. Dazu erhält die Elektronik Anweisungen bezüglich des Formats des einlaufenden blattförmigen Bedruckstoffes und des für den blattförmigen Bedruckstoff vorgesehenen Abstandes der Mittellinie des blattförmigen Bedruckstoffs zur Mittellinie des Transportpfades. Die Anweisungen können von einer vorgelagerten, nicht gezeigten, dem Fachmann bekannten Sensorik der Elektronik übergeben werden oder aus einem nicht gezeigten, dem Fachmann bekannten Speicher ausgelesen werden, in den zuvor die Information über das Format des blattförmigen Bedruckstoffs abgelegt wurde.

Im Obertisch 202 sind erste Kontaktelemente 22 und zweite Kontaktelemente 26 angeordnet. Die ersten Kontaktelemente sind als Kugeln 22 ausgeführt, die in einer Kugelleiste 21 frei drehbar gelagert sind. Als Kugeln werden Kunststoff- und/oder Metallkugeln eingesetzt, die mit ihrem Gewicht und ihrer Oberflächenbeschaffenheit auf die zu transportierenden blattförmigen Bedruckstoffe abgestimmt sind, so dass blattförmige Bedruckstoffe mit einem Flächengewicht von 50 g/m² bis 300 g/m² in Zusammenwirkung mit dem Transportelement 28 gegen den Anschlag 23 geleitet werden.

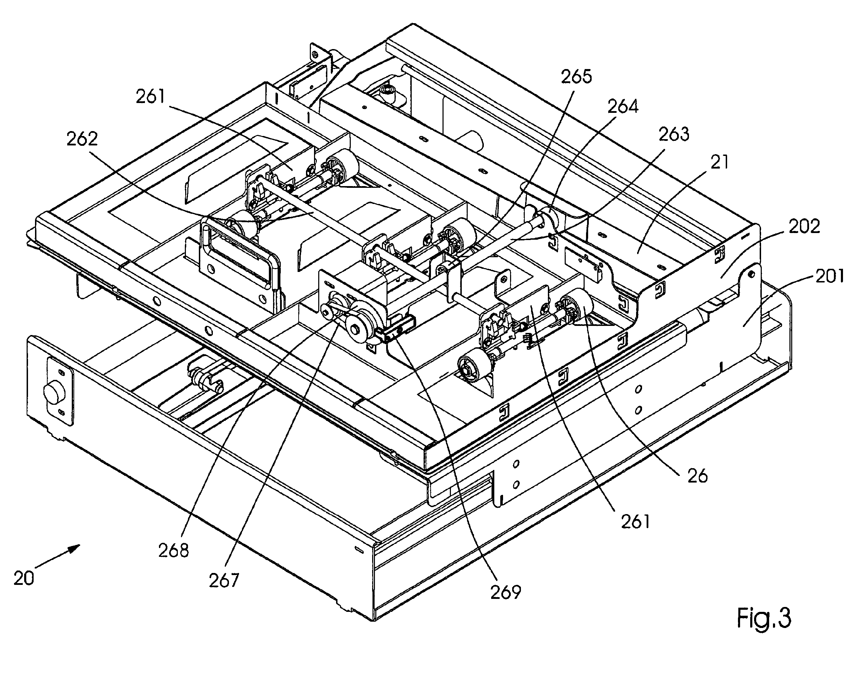

Wie in Fig. 3 gezeigt, befindet sich auf der Oberseite des Obertischs 202 ein weiterer Motor 266, der über einen Riemenantrieb 267 eine gerätefest drehbar gelagerte Antriebsstange 263 antreibt. Auf der Antriebsstange 263 sind ein erster Exzenter 264 und ein zweiter Exzenter 265 angebracht. Der erste Exzenter 264 steht in Kontakt mit der Kugelleiste 21 und ist derart auf der Antriebstange 263 befestigt, so dass die Rotation der Antriebstange 263 ein Heben oder Absenken der Kugelleiste 21 bewirkt. Durch Anheben der Kugelleiste 21 werden die ersten Kontaktelemente 22 ebenfalls angehoben und verlieren so den Kontakt zu dem ersten Transportelement 28.

Der zweite Exzenter 265 steht mit einer Schubstange 262 in Kontakt und ist derart auf der Antriebstange 263 befestigt, dass die Rotation der Antriebstange 263 eine Vorwärts- oder Rückwärtsbewegung der Schubstange 262 bewirkt. Die Schubstange 262 steht über Hebel 261 in Wirkverbindung mit den zweiten Kontaktelementen 26, so dass eine Vorwärts- oder Rückwärtsbewegung der Schubstange 262 ein Anheben oder Absenken der zweiten Kontaktelemente 26 bewirkt.

Der erste Exzenter 264 und zweite Exzenter 265 sind auf der Antriebstange 263 so zueinander befestigt, dass bei abgesenkten ersten Kontaktelemente 22 die zweiten Kontaktelemente 26 angehoben sind und umgekehrt bei abgesenkten zweiten Kontaktelemente 26 die ersten Kontaktelemente 22 angehoben sind. Auf diese Weise wirken stets nur entweder die ersten Kontaktelemente 22 mit den ersten Transportelementen 28 zusammen oder die zweiten Kontaktelemente 26 mit den zweiten Transportelementen 27, um einen blattförmigen Bedruckstoff durch die erfindungsgemäße Vorrichtung 20 zu transportieren. Durch die Stellung der Antriebswelle 263 kann daher bestimmt werden, ob ein einlaufender blattförmiger Bedruckstoff an dem Anschlag 23 ausgerichtet wird, oder ob der blattförmige Bedruckstoff ohne Ausrichtung durch die erfindungsgemäße Vorrichtung 20 transportiert wird.

Um die Position der Antriebsstange 263 zu kontrollieren, ist auf der Antriebstange 263 eine Markierung 268 mitdrehend befestigt, über die mittels eines Sensors 269 die Lage der Antriebstange 263 überwacht wird. Die mitdrehende Markierung 268 ist beispielweise durch eine Lochscheibe ausgeführt.

Die hier beschriebene Vorrichtung für den Transport von blattförmigen Bedruckstoffen findet besonderen Einsatz bei der Inline-Weiterverarbeitung von Druckprodukten von Digitaldruckmaschinen. Eine Verwendung in allen Kopierern / Druckern, bei denen ein blattförmiger Bedruckstoff wahlweise ausgerichtet oder in einem Bypass-Betrieb nicht ausgerichtet werden soll, ist ebenfalls gegeben. Auch eine Verwendung in Bogenoffsetdruckmaschinen oder Weiterverarbeitungsvorrichtungen wie Falz-, Siegel- oder Heftvorrichtungen liegen im Rahmen der hier dargestellten Erfindung.

### Liste der Bezugszeichen

- 4: Bewegungsrichtung eines blattförmigen Bedruckstoffs
- 20: erfindungsgemäße Vorrichtung
- 201: Untertisch
- 202: Obertisch
- 21: Kugelleiste
- 22: Kugel
- 23: Anschlag
- 24: Riemenzug
- 241: Motor
- 242: Führungsstange
- 243: Gleitlager
- 26: Gegenrollen
- 261: Hebel
- 262: Schubstange
- 263: Antriebstange
- 264: erster Exzenter
- 265: zweiter Exzenter
- 266: Motor
- 267: Riemenantrieb
- 268: Markierung
- 269: Sensor
- 27: Transportrollen
- 271: Motor
- 272: Riemenzug
- 28: schräglaufendes Transportband

## Patentansprüche

1. Vorrichtung zum Transport von blattförmigen Bedruckstoffen mit einem ersten Transportelement (28) und ersten Kontaktelementen (22), die beim Transport eines blattförmigen Bedruckstoffs durch die Vorrichtung (20) eine Ausrichtung des blattförmigen Bedruckstoffs an einen seitlichen Anschlag (23) bewirken, wobei die Vorrichtung zweite Transportelemente (27) und zweite Kontaktelemente (26) aufweist, die beim Transport des blattförmiger Bedruckstoffs durch die Vorrichtung (20) keine Ausrichtung des blattförmiger Bedruckstoffs bewirken
**dadurch gekennzeichnet,**
**dass** zwischen den ersten Kontaktelementen (22) und den zweiten Kontaktelementen (26) ein Kopplungsmechanismus (261, 262, 263, 264, 265) besteht, mittels der der Transport des blattförmigen Bedruckstoffs umgeschaltet werden kann, so dass entweder eine Ausrichtung oder keine Ausrichtung des blattförmigen Bedruckstoffs vorgenommen wird.

2. Vorrichtung nach Anspruch 1,
**dadurch gekennzeichnet,**
**dass** die Vorrichtung (20) eine Steuerung und Speichermittel umfasst, mittels deren der Wechsel zwischen dem ersten Transportelement (28) und den zweiten Transportelementen (27) automatisch gemäß einer in den Speichermitteln abgelegten Anweisung erfolgt.

3. Vorrichtung nach einem der Ansprüche 1 bis 2,
**dadurch gekennzeichnet,**
**dass** es sich bei dem ersten Transportelement (28) um ein angetriebenes, schräglaufendes Band (28) handelt, das den blattförmigen Bedruckstoff seitlich gegen den Anschlag (23) befördert.

4. Vorrichtung nach einem der Ansprüche 1 bis 3,
**dadurch gekennzeichnet,**
**dass** sich der Anschlag (23) seitlich verschieben lässt.

5. Vorrichtung nach Anspruch 4,
**dadurch gekennzeichnet,**
**dass** die Vorrichtung (20) eine Steuerung und Speichermittel umfasst mittels deren die seitliche Anpassung des Anschlags (23) automatisch gemäß einer in den Speichermitteln abgelegten Anweisung erfolgt.

6. Vorrichtung nach einem der Ansprüche 4 bis 5,
**dadurch gekennzeichnet,**
**dass** die seitliche Verschiebung des Anschlags (23) durch einen mittels eines Motors (241) angetriebenen Riemenzugs (24) oder einer Spindel oder einer Kurvenscheibe erfolgt.

7. Vorrichtung nach einem der Ansprüche 1 bis 6,
**dadurch gekennzeichnet,**
**dass** es sich bei den zweiten Transportelementen (27) um Transportrollenpaare (27) handelt und es sich bei den zweiten Kontaktelementen (26) um Gegenroller (26) handelt, mit denen der Kontakt zwischen blattförmigem Bedruckstoff und den zweiten Transportelementen (27) hergestellt wird, so dass ein Transport des blattförmigen Bedruckstoffs ohne Ausrichtung erfolgt.

8. Vonichtung nach einem der Ansprüche 1 bis 7,
**dadurch gekennzeichnet,**
**dass** es sich bei den ersten Kontaktelementen (22) um Kugeln (22) handelt, wobei die Kugeln (22) frei drehbar in einer Kugelleiste (21) gelagert sind und die Kugeln (22) durch ihr Gewicht und ihre Oberflächenbeschaffenheit für einen Transport ausreichenden Kontakt zwischen blattförmigem Bedruckstoff und erstem Transportelement (28) herstellen.

9. Vorrichtung nach Anspruch 8,
**dadurch gekennzeichnet,**
**dass** der Kopplungsmechanismus (261, 262, 263, 264, 265) zwischen der Kugelleiste (21) und den zweiten Kontaktelementen (26) eine Antriebstange (263) umfasst, die gerätefest drehbar gelagert ist, sowie einen ersten Exzenter (264) in Kontakt mit der Kugelleiste (21) und einen zweiten Exzenter (265) in Kontakt mit einer Schubstange (262), wobei der erste Exzenter (264) und der zweite Exzenter (265) auf der Antriebstange (263) befestigt sind, sowie eine Schubstange (262) und Hebel (261), die eine Wirkverbindung zwischen dem zweiten Exzenter (265) und den zweiten Kontaktelementen (26) herstellen.

10. Vorrichtung nach Anspruch 9,
**dadurch gekennzeichnet,**
**dass** der erste Exzenter (264) und der zweite Exzenter (265) derart auf der Antriebstange (263) angebracht sind, so dass durch Rotation der Antriebstange (263) entweder sich die ersten Kontaktelemente (22) oder die zweiten Kontaktelemente (26) anheben bzw. absenken.

11. Vorrichtung nach einem der Ansprüche 1 bis 10,
**dadurch gekennzeichnet,**
**dass** die Vorrichtung (20) einen Untertisch (201) und einen Obertisch (202) umfasst, wobei der Kopplungsmechanismus (261, 262, 263, 264, 265) und die Kontaktelemente (22, 26) in dem über dem Transportpfad der blattförmigen Bedruckstoffe befindlichen Obertisch (202) angeordnet sind und der Obertisch (202) schwenkbar an dem Untertisch (202) gelagert ist.

12. Vorrichtung nach einem der Ansprüche 1 bis 11,
**dadurch gekennzeichnet,**
**dass** die Vorrichtung (20) einen Sensor (269) und eine Markierung (268) umfasst, mittels dem die Funktionsposition der Kontaktelemente (22, 26) überwacht wird.

## Claims

1. Device for transporting sheet-shaped printing materials including a first transport element (28) and first contact elements (22) that cause a sheet-shaped printing material to be aligned against a lateral stop (23) as the sheet-shaped printing material is transported through the device (20), carry out an alignment of the sheet-shaped printing material at a lateral stop (23), and including second transport elements (27) and second contact elements (26) that do not cause the sheet-shaped printing material to be aligned as the sheet-shaped printing material is transported through the device (20),
**characterized in that**
there is a coupling mechanism (261, 262, 263, 264, 265) between the first contact elements (22) and the second contact elements (26) for switching the transport of the sheet-shaped printing materials such that the sheet-shaped printing material is either aligned or not aligned.

2. Device according to claim 1,
**characterized in that**
the device (20) comprises a control and memory means, with the aid of which the change between the first transport element (28) and the second transport element (27) occurs automatically according to an instruction stored in the memory means.

3. Device according to one of claims 1 to 2,
**characterized in that**
the first transport element (28) is a driven, diagonally-running belt (28) that guides the sheet-shaped printing material laterally against the stop (23).

4. Device according to one of claims 1 to 3,
**characterized in that**
the stop (23) can be moved laterally.

5. Device according to claim 4,
**characterized in that**
the device (20) comprises a control and memory means for automatically implementing the lateral adjustment of stop (23) according to an instruction stored in the memory means.

6. Device according to one of claims 4 to 5,
**characterized in that**
the lateral displacement of the stop (23) is carried out by a motor (241) driven belt (24) or a spindle or cam disc.

7. Device according to one of claims 1 to 6,
**characterized in that**
the second transport elements (27) are pairs of transport rollers (27) and the second contact elements (26) are counterpressure rollers (26) for establishing contact between sheet-shaped printing material and the second transport elements (27) so that the transport of the sheet-shaped printing material occurs without alignment.

8. Device according to one of claims 1 to 7,
**characterized in that**
the first contact elements (22) are balls (22) that are mounted in a ball rail (21) so that they can turn freely and produce adequate contact between the sheet-shaped printing material and the first transport element (28) for transport because of their weight and their surface finish.

9. Device according to claim 8,
**characterized in that**
the coupling mechanism (261, 262, 263, 264, 265) comprises a drive rod (263), that is located between the ball rail (21) and the second contact elements (26) and is mounted to the device so that it can turn, as well as a first eccentric element (264) in contact with the ball rail (21) and a second eccentric element (265) in contact with a connecting rod (262), the first eccentric element (264) and the second eccentric element (265) being fastened on the drive rod (263), and a connecting rod (262) and lever (261) that produce an operative connection between the second eccentric element (265) and second contact elements (26).

10. Device according to claim 9,
**characterized in that**
the first eccentric element (264) and the second eccentric element (265) are mounted on the drive rod (263) in such a way that by rotation of the drive rod (263), either the first contact elements (22) or the second contact elements (26) are lifted or lowered.

11. Device according to one of claims 1 to 10,
**characterized in that**
the device (20) has a lower table (201) an upper table (202) and the coupling mechanism (261, 262, 263, 264, 265) and the contact elements (22, 26) are mounted in the upper table (202) that is located above the transport path of the sheet-shaped printing materials and is mounted to the lower table (202) so that the upper table (202) can swivel.

12. Device according to one of claims 1 to 11,
**characterized in that**
the device (20) has a sensor (269) and a marking (268), by means of which the functional position of the contact elements (22, 26) is monitored.

## Revendications

1. Dispositif pour transporter des supports ou matériaux d'impression sous forme de feuilles, comprenant un premier élément de transport (28) et des premiers éléments de contact (22), qui lors du transport d'un support d'impression sous forme de feuille par le dispositif (20), produisent une orientation du support d'impression sous forme de feuille contre une butée latérale (23), le dispositif comportant des deuxièmes éléments de transport (27) et des deuxièmes éléments de contact (26), qui lors du transport du support d'impression sous forme de feuille par le dispositif (20), ne produisent pas d'orientation du support d'impression sous forme de feuille, **caractérisé en ce qu'**entre les premiers éléments de contact (22) et les deuxièmes éléments de contact (26) existe un mécanisme de couplage (261, 262, 263, 264, 265), au moyen duquel le transport du support d'impression sous forme de feuille peut être commuté ou inversé de manière à ce que soit effectuée une orientation ou que ne soit pas effectuée d'orientation du support d'impression sous forme de feuille.

2. Dispositif selon la revendication 1, **caractérisé en ce que** le dispositif (20) comprend une commande et des moyens de mémoire, à l'aide desquels s'effectue automatiquement le changement entre le premier élément de transport (28) et les deuxièmes éléments de transport (27), conformément à une instruction stockée dans les moyens de mémoire.

3. Dispositif selon l'une des revendications 1 à 2, **caractérisé en ce qu'**en ce qui concerne le premier élément de transport (28), il s'agit d'une bande (28) entraînée et circulant de manière oblique, qui transporte le support d'impression sous forme de feuille latéralement contre la butée (23).

4. Dispositif selon l'une des revendications 1 à 3, **caractérisé en ce que** la butée (23) peut être déplacée latéralement.

5. Dispositif selon la revendication 4, **caractérisé en ce que** le dispositif (20) comprend une commande et des moyens de mémoire à l'aide desquels l'adaptation latérale de la butée (23) s'effectue automatiquement, conformément à une instruction stockée dans les moyens de mémoire.

6. Dispositif selon l'une des revendications 4 à 5, **caractérisé en ce que** le déplacement latéral de la butée (23) s'effectue par une transmission à courroie (24) entraînée au moyen d'un moteur, ou une vis ou un disque de came.

7. Dispositif selon l'une des revendications 1 à 6, **caractérisé en ce qu'**en ce qui concerne les deuxièmes éléments de transport (27), il s'agit de paires de rouleaux de transport (27), et en ce qui concerne les deuxièmes éléments de contact (26) il s'agit de rouleaux conjugués (26) à l'aide desquels est établi le contact entre le support d'impression sous forme de feuille et les deuxièmes éléments de transport (27), de manière à produire un transport du support d'impression sous forme de feuille, sans orientation.

8. Dispositif selon l'une des revendications 1 à 7, **caractérisé en ce qu'**en ce qui concerne les premiers éléments de contact (22), il s'agit de billes (22), les billes (22) étant montées librement rotatives dans une barre à billes (21), et **en ce que** les billes (22), par leur poids et par leurs caractéristiques d'état de surface, établissent un contact suffisant pour le transport, entre le support d'impression sous forme de feuille et le premier élément de transport (28).

9. Dispositif selon la revendication 8, **caractérisé en ce que** le mécanisme de couplage (261, 262, 263, 264, 265) comprend, entre la barre à billes (21) et les deuxièmes éléments de contact (26), une tige d'entraînement (263) qui est montée rotative en position fixe dans l'appareil, ainsi qu'un premier excentrique (264) en contact avec la barre à billes (21) et un deuxième excentrique (265) en contact avec une tige de poussée (262), le premier excentrique (264) et le deuxième excentrique (265) étant fixés sur la tige d'entraînement (263), ainsi qu'une tige de poussée (262) et un levier (261), qui établissent une liaison active entre le deuxième excentrique (265) et les deuxièmes éléments de contact (26).

10. Dispositif selon la revendication 9, **caractérisé en ce que** le premier excentrique (264) et le deuxième excentrique (265) sont placés de manière telle sur la tige d'entraînement (263), que par rotation de la tige d'entraînement (263), soit les premiers éléments de contact (22), soit les deuxièmes éléments de contact (26) se soulèvent ou respectivement s'abaissent.

11. Dispositif selon l'une des revendications 1 à 10, **caractérisé en ce que** le dispositif (20) comprend une table inférieure (201) et une table supérieure (202), le mécanisme de couplage (261, 262, 263, 264, 265) et les éléments de contact (22, 26) étant agencés dans la table supérieure (202) se trouvant au-dessus du parcours de transport des supports d'impression sous forme de feuilles, et la table supérieure (202) étant montée pivotante sur la table inférieure (201).

12. Dispositif selon l'une des revendications 1 à 11, **caractérisé en ce que** le dispositif (20) comprend un détecteur (269) et une marque (268) au moyen desquels est surveillée ou contrôlée la position fonctionnelle des éléments de contact (22, 26).
